# EUROPEAN PATENT APPLICATION

(11) **EP 1 288 655 A2**
(43) Date of publication of application: **05.03.2003**
(21) Application number: 02256064.3
(22) Date of filing: 02.09.2002
(51) Int. Cl.: G01N 27/407

(54) **Gas sensor**

(30) Priority: 03.09.2001 JP 2001265756; 09.11.2001 JP 2001344781
(71) Applicant: NGK Spark Plug Company Limited, Nagoya, Aichi (JP)
(72) Inventor: Kondo, Tomonori, NGK Spark Plug Co., Ltd, Nagoya, Aichi (JP); Kitanoya, Shoji, NGK Spark Plug Co., Ltd, Nagoya, Aichi (JP); Nadanami, Norihiko, NGK Spark Plug Co., Ltd, Nagoya, Aichi (JP); Watanabe, Masaya, NGK Spark Plug Co., Ltd, Nagoya, Aichi (JP); Ishida, Noboru, NGK Spark Plug Co., Ltd, Nagoya, Aichi (JP)
(74) Representative: Nicholls, Michael John

(57) **Abstract**

A hydrogen gas sensor is configured such that a first electrode 3 is provided on one surface of a proton conduction layer 1; a second electrode 5 and a reference electrode 7 are provided on the other surface of the proton conduction layer 1 in opposition to the first electrode 3; and these components are supported in a support element 10 consisting of a first support element 8 and a second support element 9. The first support element 8, which partially constitutes the support element 10, has a diffusion controlling portion 19 for establishing communication between an ambient atmosphere and a first recess 11 (thus the first electrode 3). The diffusion controlling portion 19 is a small hole adapted to introduce to the side toward the first electrode 3 a fuel gas (thus hydrogen gas contained therein), which is a gas to be measured, and to control diffusion of the gas. The diffusion controlling portion 19 is disposed away from an end portion T of the second electrode 5 located on the side toward the reference electrode 7, in the direction away from the reference electrode 7. The ratio (area ratio) S1/S2 between the first area S1 (the area of the meshed portion in FIG. 1) and the second area S2 (the area of the hatched portion in FIG. 1) is less than 0.35, where the first area S1 is the area of a portion of a first electrode 3 on which the projected image of a second electrode 5 is not superimposed when the second electrode 5 is projected onto the first electrode 3, and the second area S2 is the area of a portion of the second electrode 5 which is superimposed on the first electrode 3 when the second electrode 5 is projected onto the first electrode 3. That is, the arrangement and respective areas of the first electrode 3 and the second electrode 5 are determined such that, when the second electrode 5 is projected onto the first electrode 3, the projected image of the second electrode 5 falls within the first electrode 3, and the area ratio S1/S2 is less than 0.35.

## Description

The present invention relates to a gas sensor such as a hydrogen sensor for measuring the concentration of hydrogen gas in a fuel gas for use in a fuel cell.

In response to concerns about global environmental pollution, in recent years intensive studies have been conducted on fuel cells for use as high-efficiency, clean power sources. Among such fuel cells, a polymer electrolyte fuel cell (PEFC) shows promise for automobile use and household use, by virtue of its inherent advantages, such as operation at low temperature and high output density.

A promising fuel gas for use in PEFC is a reformed gas. In this connection, in order to enhance efficiency and the like factor, a sensor capable of directly detecting hydrogen in a reformed gas must be provided. Since this sensor is used in a hydrogen rich atmosphere, an operating temperature thereof must be low (about 100°C or lower).

Such a sensor of low-temperature operation type is proposed in, for example, European Patent No. 1103807A2. As shown in FIG. 9, the proposed sensor employs a proton conduction layer 101 formed from a polymer electrolyte and is configured such that a first electrode 102, a second electrode 103, and a reference electrode 104 are disposed on the corresponding surfaces of the proton conduction layer 101.

However, since the proposed sensor is configured such that the first electrode 102, which is disposed in opposition to the second electrode 103 while the proton conduction layer 101 is held therebetween, extends to a region where a corresponding portion thereof is not in opposition to the second electrode 103; i.e., such that the first electrode 102 is disposed in opposition to not only the second electrode 103 but also the reference electrode 104, in the course of pumping hydrogen (specifically, hydrogen ions H⁺, or protons) from the first electrode 102 to the second electrode 103, the sensor involves a portion of the first electrode 102 which encounters difficulty in pumping hydrogen (i.e., the meshed portion of FIG. 9, where hydrogen concentration is high).

Further, in this sensor, the potential difference between the first electrode 102 and the reference electrode 104 is controlled at a constant level. In this connection, the controlled potential difference or voltage is determined according to average hydrogen concentration on the first electrode 102 and hydrogen concentration on the reference electrode 104. Therefore, as in the case of this sensor, when the first electrode 102 involves a portion which encounters difficulty in pumping hydrogen, the hydrogen concentration of the portion becomes high. Thus, control for lowering the average hydrogen concentration causes excessive pumping as compared with the usual case; as a result, the first electrode 102 involves a portion where hydrogen concentration is excessively low.

In the proposed sensor, as shown in FIG. 9, a part of the diffusion controlling portion 105 is located rightward of the end of the second electrode 103 which is located on the side toward the reference electrode 104, thus raising a problem in that hydrogen of high concentration is introduced from an ambient hydrogen-rich atmosphere to a portion of the first electrode 102 which encounters difficulty in pumping hydrogen. Thus, as in the above-described case, control for lowering the average hydrogen concentration causes the first electrode 102 to involve a portion where hydrogen concentration is relatively low.

As a result, at a portion of the first electrode 102 where hydrogen concentration is relatively low, methanol or the like may be dissociated or undergo a like action, thereby increasing current flowing between the first electrode 102 and the second electrode 103. The increase in current influences measurement of hydrogen gas concentration, resulting in a failure to accurately measure hydrogen concentration.

An object of the invention is to provide a gas sensor capable of accurately measuring gas concentration, such as hydrogen gas concentration. A further object of the invention is to solve the above-mentioned problems.

Both aspects of the present invention are directed to the problem of dissociation of methanol which can influence the measurement of hydrogen gas concentration. Both aspects of the present invention do this by maintaining the concentration of hydrogen or the like throughout the first electrode relatively high.

The present invention relates to a gas sensor comprising a proton conduction layer; a first electrode, a second electrode, and a reference electrode provided in contact with the proton conduction layer; and a diffusion controlling portion provided between the first electrode and an atmosphere containing a gas to be measured; wherein an object gas component (e.g., hydrogen gas) contained in the gas to be measured which is introduced from the atmosphere via the diffusion controlling portion is caused to be dissociated, decomposed, or reacted through application of voltage (sufficiently high for generating limiting current) between the first electrode and the second electrode such that a constant potential difference is produced between the first electrode and the reference electrode, to thereby generate protons, and concentration of the object gas component is obtained on the basis of limiting current generated as a result of the generated protons being pumped out via the proton conduction layer from the first electrode to the second electrode.

Particularly, in a first aspect the present invention provides that the first electrode and the second electrode are disposed in opposition to each other while the proton conduction layer is held therebetween, and the ratio S1/S2 between the first area S1 and the second area S2 is less than 0.35, where the first area S1 is the area of a portion of the first electrode on which a projected image of the second electrode is not superimposed when the second electrode is projected onto the first electrode, and the second area S2 is the area of a portion of the second electrode which is superimposed on the first electrode when the second electrode is projected onto the first electrode.

According to the present invention, the ratio S1/S2 between the first area S1 of the first electrode and the second area S2 of the second electrode is less than 0.35; i.e., the first electrode and the second electrode are superimposed over a large portion as viewed in the direction of projection, thereby reducing the influence, on measurement, of the above-mentioned portion of the first electrode which encounters difficulty in pumping hydrogen or the like. As a result, in the course of controlling potential difference between the first electrode and the reference electrode at a constant level, no portion of the first electrode becomes relatively low in concentration of hydrogen or the like, thereby preventing, for example, dissociation of methanol or the like. Therefore, concentration of an object gas component such as hydrogen can be accurately measured without involvement of influence of, for example, methanol.

The first electrode and the second electrode may be disposed such that, when the first electrode or the second electrode, whichever is smaller in area, is projected onto the other electrode, a projected image of the electrode having the smaller area is present within the electrode having the greater area.

Thus the relationship between position and size with respect to the first electrode and the second electrode is specified; the entire portion of the first electrode or the second electrode, whichever is smaller, faces the electrode having greater area, whereby an object substance of measurement such as hydrogen can be efficiently pumped from the first electrode to the second electrode.

In a further aspect, the present invention provides that the first electrode and the second electrode are disposed in opposition to each other while the proton conduction layer is held therebetween, and the diffusion controlling portion is disposed away from an end portion of the second electrode located on a side toward the reference electrode, in a direction away from the reference electrode.

According to the present invention, the diffusion controlling portion is disposed away from an end portion of the second electrode located on a side toward the reference electrode, in a direction away from the reference electrode, whereby an object gas component; for example, hydrogen introduced from a hydrogen-rich atmosphere, can be pumped before hydrogen or the like reaches a portion of the first electrode which encounters difficulty in pumping hydrogen or the like, thereby preventing the presence of a portion of the first electrode where concentration of hydrogen or the like is relatively high. As a result, in the course of controlling the potential difference between the first electrode and the reference electrode at a constant level, no portion of the first electrode becomes relatively low in concentration of hydrogen or the like, thereby preventing, for example, dissociation of methanol or the like. Therefore, concentration of an object gas component such as hydrogen can be accurately measured without involvement of influence of, for example, methanol.

The diffusion controlling portion is preferably disposed at least 1.5 mm away from an end portion of the second electrode located on a side toward the reference electrode, in a direction away from the reference electrode.

By disposing the diffusion controlling portion at least 1.5 mm away from an end portion of the second electrode located on a side toward the reference electrode, a local increase in hydrogen concentration can be more effectively controled, thereby greatly enhancing accuracy in measuring hydrogen gas concentration or the like.

The gas sensor may be a hydrogen gas sensor for measuring hydrogen gas concentration.

The gas sensor may be used for measuring the concentration of hydrogen gas in a fuel gas for use in a polymer electrolyte fuel cell.

The present invention enables accurate measurement of the concentration of hydrogen gas in a fuel gas for use in a polymer electrolyte fuel cell without involvement of influence of, for example, methanol.

Notably, the gas sensor may be configured such that the proton conduction layer, the first electrode, the second electrode, the reference electrode, and the diffusion controlling portion are supported by a support element.

The diffusion controlling portion may be adapted to control diffusion of a gas to be measured (particularly an object gas component) which is introduced into the gas sensor from the atmosphere, and may be implemented by, for example, a through-hole formed in the support element or a gas permeable, porous substance which fills the hole.

Fig. 1 is an explanatory cutaway view showing a hydrogen gas sensor of Embodiment 1 of the present invention.

FIG. 2 is a perspective view showing the relationship between a first electrode and a second electrode.

FIG. 3 is a first graph showing experiment results.

FIG. 4 is a perspective view showing the relationship between a first electrode and a second electrode in Embodiment 2 of the present invention.

FIG. 5 is a perspective view showing the relationship between a first electrode and a second electrode in Embodiment 3 of the present invention.

Fig. 6 is an explanatory cutaway view showing a hydrogen gas sensor of embodiment 4 of the present invention.

FIG. 7 is an explanatory cutaway view showing a hydrogen gas sensor for experimental use.

FIG. 8 is a second graph showing experiment results.

FIG. 9 is an explanatory cutaway view showing a conventional hydrogen gas sensor.

### Description of Reference Numerals

- 1: proton conduction layer
- 3, 31, 41: first electrodes
- 5, 33, 43: second electrodes
- 7: reference electrode
- 19: diffusion controlling portion

Examples (embodiments) of a mode for carrying out the present invention will next be described.

### Embodiment 1

The present embodiment of a gas sensor is a hydrogen gas sensor used for measuring the concentration of hydrogen gas in a fuel gas for use in a polymer electrolyte fuel cell.

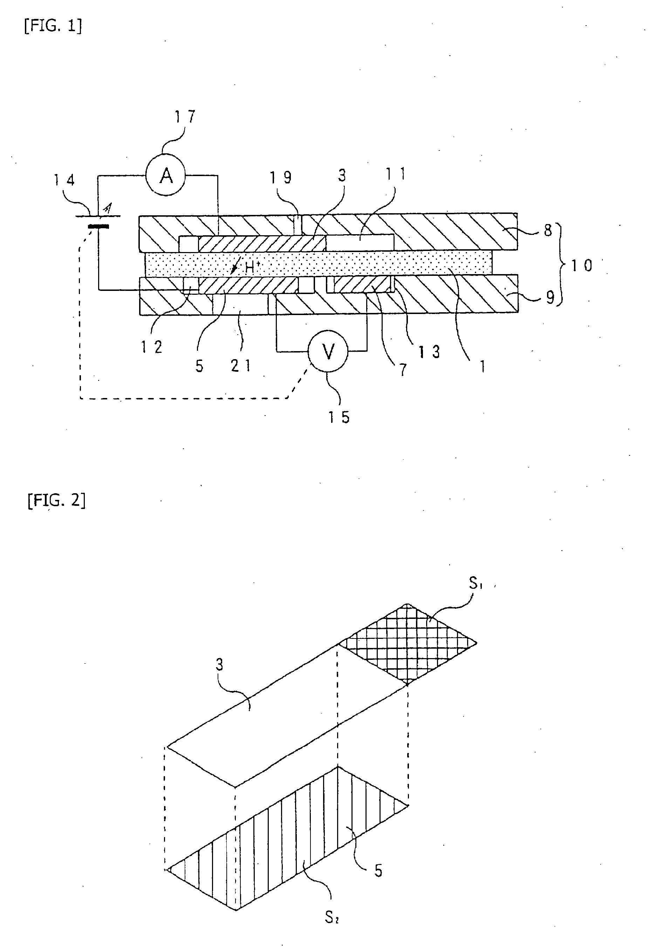

a) First, the configuration of the hydrogen gas sensor of the present embodiment will be described with reference to FIG. 1. FIG. 1 is a sectional view of the hydrogen gas sensor taken along the longitudinal direction thereof.

As shown in FIG. 1, the hydrogen gas sensor of the present embodiment is configured such that a first electrode 3 is provided on one surface (upper surface in FIG. 1) of a proton conduction layer 1; a second electrode 5 and a reference electrode 7 are provided on the other surface (lower surface in FIG. 1) of the proton conduction layer 1 in opposition to the first electrode 3; and these components are supported in a support element 10 consisting of a first support element 8 and a second support element 9.

Specifically, the proton conduction layer 1 is held between the first support element 8 and the second support element 9; the first electrode 3 is covered by the first support element 8 while being disposed within a first recess 11; the second electrode 5 is covered by the second support element 9 while being disposed within a second recess 12; and the reference electrode 7 is covered by the second support element 9 while being disposed within a third recess 13.

The hydrogen gas sensor can be formed into a unitary body as follows: while the proton conduction layer 1 is held between the first support element 8 and the second support element 9, the resultant assembly is fixed by means of an unillustrated fixing member or the like, or by means of a resin or the like.

The proton conduction layer 1 can move protons (H⁺) from one side thereof to the other side thereof; for example, from the first electrode 3 to the second electrode 5. Preferably, a material for the proton conduction layer 1 allows operation at relatively low temperature (e.g., 150°C or lower). An example of such a material is Nafion (trade name, product of DuPont), which is a fluorine-containing resin.

The first electrode 3, the second electrode 5, and the reference electrode 7 are, for example, porous electrodes which contain a predominant amount of carbon. Each of the electrodes 3, 5, and 7 is coated with, for example, platinum on the side which comes into contact with the proton conduction layer 1. The platinum coating serves as a catalyst layer.

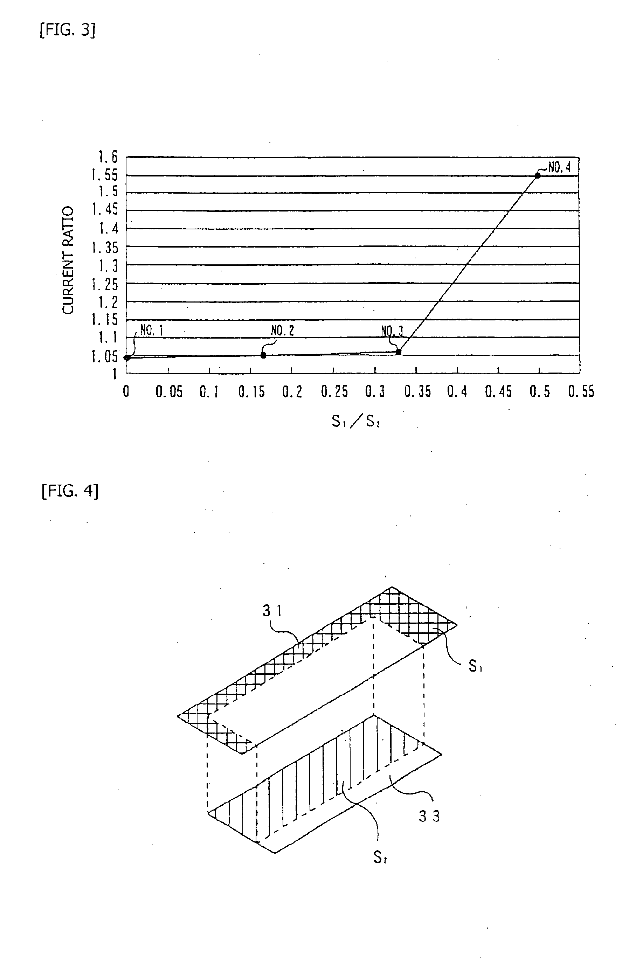

Particularly, in the present embodiment, as shown in FIG. 2, the ratio (area ratio) S1/S2 between the first area S1 (the area of the meshed portion in FIG. 2) and the second area S2 (the area of the hatched portion in FIG. 2) is less than 0.35 (e.g., not greater than 0.33), where the first area S1 is the area of a portion of the first electrode 3 on which the projected image of the second electrode 5 is not superimposed when the second electrode 5 is projected onto the first electrode 3, and the second area S2 is the area of a portion of the second electrode 5 which is superimposed on the first electrode 3 when the second electrode 5 is projected onto the first electrode 3.

That is, the arrangement and respective areas of the first electrode 3 and the second electrode 5 are determined such that, when the second electrode 5 is projected onto the first electrode 3, the projected image of the second electrode 5 falls within the first electrode 3, and the area ratio S1/S2 is less than 0.35. Therefore, in the projected condition, the second electrode 5 and the first electrode 3 coincide with each other in the width direction and at the respective longitudinal ends (located on the side opposite the reference electrode 7).

The first electrode 3, the second electrode 5, and the reference electrode 7 are connected to a circuit via unillustrated corresponding lead portions such that a power supply (cell) 14 applies a voltage between the first electrode 3 and the second electrode 5; the voltage produced between the first electrode 3 and the reference electrode 7 is measured by means of a voltmeter 15; and the current which flows between the first electrode 3 and the second electrode 5 is measured by means of an ammeter 17.

Further, the reference electrode 7 is used such that, by maintaining voltage between the first electrode 3 and the reference electrode 7 at a constant level, there is reduced the influence of disturbances such as temperature and humidity on measurement of the concentration of hydrogen gas in a gas to be measured. Preferably, in order to stabilize hydrogen concentration on the reference electrode 7, the reference electrode 7 is a self-generation-type reference electrode.

The support element 10 is an insulator formed from, for example, ceramic which contains a predominant amount of alumina. In addition to an inorganic insulator formed from, for example, ceramic, an organic insulator formed from, for example, resin can also serve as the support element 11.

The first support element 8, which partially constitutes the support element 10, has a diffusion controlling portion 19 for establishing communication between an ambient atmosphere and the first recess 11 (thus the first electrode 3).

Specifically, the diffusion controlling portion 19 is a small hole (e.g., diameter 0.06 mm) adapted to introduce to the first electrode 3 a fuel gas (thus hydrogen gas contained therein), which is a gas to be measured, and to control diffusion of the gas.

The degree of controlling diffusion can be adjusted by adjusting the inside diameter of the diffusion controlling portion 19 or filling the diffusion controlling portion 19 with a porous material such as alumina.

The second support element 9 has a hole 21 having a diameter of, for example, 1.7 mm formed therein for establishing communication between the ambient atmosphere and the second recess 12 (thus the second electrode 5).

Each of the first support element 8 and the second support element 9 is formed by the steps of laminating sheets which contain ceramic and firing the resultant laminate. A lead portion formed from, for example, platinum is sandwiched between the sheets. A lead portion sandwiched between the sheets of the first support element 8 and that sandwiched between the sheets of the second support element 9 are exposed on the corresponding bottom portions of the recesses 11-13, thereby coming in contact with the corresponding electrodes 3-7 at the side opposite their catalyst layers and thus establishing electrical connection to the corresponding electrodes 3-7.

b) Next will be described the principle of measurement and the procedure of measurement with respect to the hydrogen gas sensor of the present embodiment.

When the hydrogen gas sensor is exposed to a fuel gas, hydrogen which has reached the first electrode 3 from an ambient atmosphere via the diffusion controlling portion 19 causes an electromotive force to be induced between the first electrode 3 and the reference electrode 7 via the proton conduction layer 1 according to hydrogen gas concentration (specifically, according to a difference in hydrogen gas concentration between the first electrode 3 and the reference electrode 7).

The power supply 14 applies voltage between the first electrode 3 and the second electrode 5 such that the potential difference between the first electrode 3 and the reference electrode 7 becomes constant.

As a result, hydrogen is dissociated into protons on the first electrode 3; the thus-generated protons are pumped out to the second electrode 5 via the proton conduction layer 1 to become hydrogen again; and the thus-generated hydrogen diffuses into the atmosphere.

At this time, since current flowing between the first electrode 3 and the second electrode 5 (limiting current which is an upper limit current to be reached upon application of the aforementioned voltage) is proportional to hydrogen gas concentration, measuring the current enables determination of hydrogen gas concentration.

The role of the reference electrode 7 will next be described.

An applied voltage is controlled by use of the reference electrode 7 such that potential difference between the first electrode 3 and the reference electrode 7 becomes constant; i.e., voltage between the first electrode 3 and the second electrode 5 can be varied such that potential difference between the first electrode 3 and the reference electrode 7 becomes constant. Thus, the optimum voltage can be variably applied between the first electrode 3 and the second electrode 5 over a wide range of hydrogen gas concentration; for example, high voltage is applied at high hydrogen concentration, and low voltage is applied at low hydrogen concentration. Therefore, a wide range of hydrogen gas concentration can be measured at high accuracy.

Even when resistance between the first electrode 3 and the second electrode 5 varies as a result of variation in temperature of or H₂O concentration of a gas to be measured, voltage to be applied between the first electrode 3 and the second electrode 5 can be variably controlled accordingly. Therefore, even when measuring conditions such as the concentration of hydrogen gas or H₂O in a gas to be measured and the temperature of the gas to be measured vary greatly, hydrogen gas concentration can be measured at high accuracy.

c) Next, a method for manufacturing the hydrogen gas sensor of the present embodiment will be briefly described.

For example, as shown in FIG. 1, the second support element 9 is placed on a bench (not shown) with the second recess 12 thereof facing upward.

Next, the proton conduction layer 1 with the first electrode 3, the second electrode 5, and the reference electrode 7 being disposed on the corresponding opposite sides thereof is placed on the second support element 9 such that the second electrode 5 and the reference electrode 7 are accommodated in the second recess 12 and the third recess 13, respectively.

Next, the first support element 8 is disposed on the proton conduction layer 1 such that the first electrode 3 is enclosed by the first recess 11.

In this state; i.e., while the proton conduction layer 1 is held between the first support element 8 and the second support element 9, the resultant assembly is press-fixed in the thickness direction thereof (in the vertical direction in FIG. 1) by means of an unillustrated fixing member or the like, thereby yielding a hydrogen gas sensor.

The side faces of the hydrogen gas sensor are covered with, for example, a resin so as to seal the sensor except for the diffusion controlling portion 19, whereby introduction of gas is allowed only through the diffusion controlling portion 19. A sealing method is not limited thereto, so long as introduction of gas (to the first electrode 3) is only allowed through the diffusion controlling portion 19.

d) Next will be described the effect yielded by the hydrogen gas sensor of the present embodiment.

The hydrogen gas sensor of the present embodiment is configured such that the ratio (area ratio) S1/S2 between the first area S1 and the second area S2 is less than *0.35,* where the first area S1 is the area of a portion of the first electrode 3 on which the projected image of the second electrode 5 is not superimposed when the second electrode 5 is projected onto the first electrode 3, and the second area S2 is the area of a portion of the second electrode 5 which is superimposed on the first electrode 3 when the second electrode 5 is projected onto the first electrode 3.

That is, the first electrode 3 and the second electrode *5* are superimposed over a large portion as viewed in the direction of projection, thereby reducing the influence, on measurement, of a portion of the first electrode 3 (a portion of the first electrode 3 in opposition to the reference electrode 7) which encounters difficulty in pumping hydrogen. As a result, in the course of controlling the potential difference between the first electrode 3 and the reference electrode 7 at a constant level, no portion of the first electrode 3 becomes relatively low in hydrogen concentration, thereby preventing, for example, dissociation of methanol or the like. Therefore, hydrogen gas concentration can be accurately measured without involvement of influence of, for example, methanol.

Further, in the present embodiment, when the second electrode 5 is projected onto the first electrode 3, the projected image of the second electrode 5 falls entirely within the first electrode 3; i.e., the entire second electrode 5 faces the first electrode 3, whereby hydrogen can be efficiently pumped from the first electrode 3 to the second electrode *5.*

e) Next will be described an experiment which was carried out in order to verify the effect of the present embodiment.

This experiment was intended to study accuracy in measurement of hydrogen gas concentration in relation to the area ratio S1/S2.

(1) First, hydrogen gas sensors similar to that of the above-described embodiment were manufactured as samples (Sample Nos. 1 to 3; articles of the present invention) which fall within the scope of the present invention, such that the first area S1 was changed while the second area S2 was held unchanged; specifically, the area ratio S1/S2 was set to "0 mm²/18 mm²=0," "3 mm²/18 mm²=approx. 0.17," and "6 mm²/18 mm²=approx. 0.33," respectively.

As a sample (article of Comparative Example) which falls outside the scope of the present invention, there was manufactured a hydrogen gas sensor similar to that of the above-described embodiment except that the area ratio S1/S2 was "9 mm²/18 mm²=0.5."

(2) By use of the articles of the present invention and the article of Comparative Example, hydrogen gas concentration was measured so as to study the accuracy; i.e., the methanol dependence, of these articles in measuring hydrogen gas concentration.

Specifically, in the course of measuring the concentration of hydrogen gas in a gas to be measured which had the predetermined composition, by use of the sample hydrogen gas sensors, current flowing between the first electrode and the second electrode was measured.

Measuring conditions are itemized below. In order to stabilize hydrogen gas concentration, a constant, small current (e.g., 10 µA) was caused to flow from the first electrode to the reference electrode, thereby causing the reference electrode to serve as a self-generation-type reference electrode.

### Measuring conditions

· Gas composition: H₂=50%, CO₂=15%, H₂O=10%, CH₃OH=0% or 5%, N₂=bal.
· Gas temperature: 80°C
· Gas flow rate: 10 L/min
· Set electric potential Vs: 150 mV

### (Electric potential set between the first electrode and the reference electrode; the first electrode assumes positive polarity)

Under the above-mentioned measuring conditions, the current (A0) at a CH₃OH content of 0% and the current (A5) at a CH₃OH content of 5% were measured, whereby the current ratio (A5/A0) was obtained; i.e., the ratio of current (sensibility) as measured at a CH₃OH content of 5% to current (sensibility) as measured at a CH₃OH content of 0%, which is taken as 1, was obtained.

(3) Measurement results are shown in FIG. 3. FIG. 3 is a graph whose vertical axis represents the current ratio and whose horizontal axis represents the area ratio S1/S2.

As is apparent from FIG. 3, the hydrogen gas sensors, Sample Nos. 1-3, of the present invention; i.e., the hydrogen gas sensors having an area ratio S1/S2 less than 0.35, exhibit a very low current ratio, as compared with the hydrogen gas sensor, Sample No. 4, of Comparative Example, which has an area ratio S1/S2 not less than 0.35, indicating that Sample Nos. 1-3 exhibit high accuracy in measurement.

The above-described measurement results reveal that by employing an area ratio S1/S2 less than 0.35, dissociation of methanol can be suppressed, whereby hydrogen gas concentration can be accurately measured.

Therefore, the hydrogen gas sensor of the present embodiment can accurately measure the concentration of hydrogen gas in a fuel gas for use in a polymer electrolyte fuel cell without involvement of influence of, for example, methanol.

### Embodiment 2

Embodiment 2 will next be described. However, description of features similar to those of Embodiment 1 will be omitted.

The hydrogen gas sensor of the present embodiment differs from that of Embodiment 1 in positional relationship between the first electrode and the second electrode.

As shown in FIG. 4, in the present embodiment, a first electrode 31 and a second electrode 33 deviate laterally to a certain extent from each other as viewed in the direction of superposition. Specifically, when the second electrode 33 is projected onto the first electrode 31, the projected image of the second electrode 33 does not entirely fall within the first electrode 31, but partially projects from the first electrode 31.

In this case, the first area S1 of the first electrode 31 is the area of a portion (the meshed portion in FIG. 4) of the first electrode 31 on which the projected image of the second electrode 33 is not superimposed, and the second area S2 of the second electrode 33 is the area of a portion (the hatched portion in FIG. 4) of the second electrode 33 which is superimposed on the first electrode 31.

Since the area ratio S1/S2 is less than 0.35, the present embodiment also yields an effect substantially similar to that yielded by Embodiment 1.

### Embodiment 3

Embodiment 3 will next be described. However, description of features similar to those of Embodiments 1 an 2 will be omitted.

The hydrogen gas sensor of the present embodiment differs from those of Embodiments 1 and 2 in positional relationship between the first electrode and the second electrode.

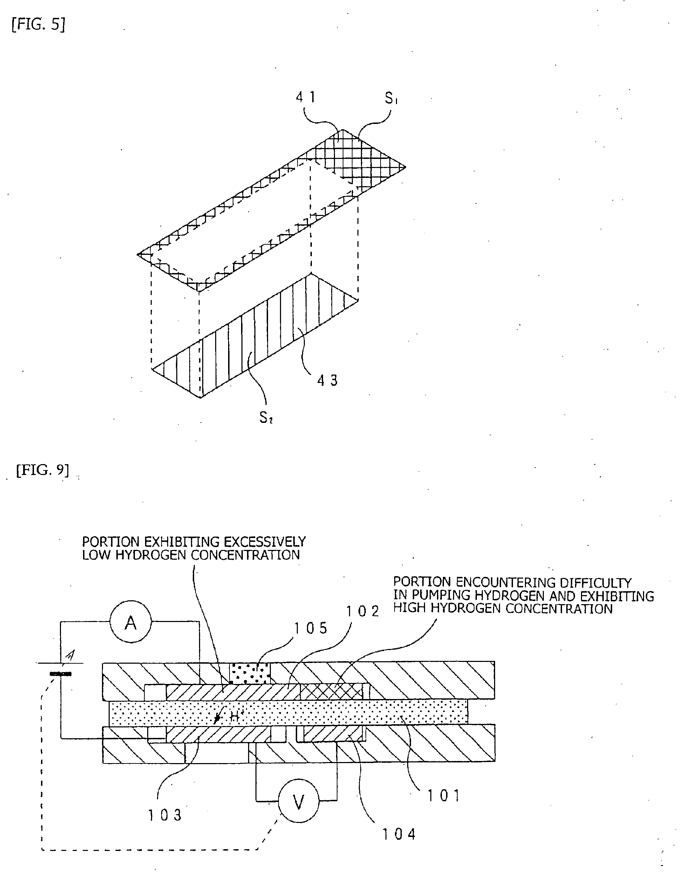

As shown in FIG. 5, in the present embodiment, a first electrode 41 and a second electrode 43 are configured such that, when the second electrode 43 is projected onto the first electrode 41, the projected image of the second electrode 43 falls entirely within the first electrode 41.

In this case, the first area S1 of the first electrode 41 is the area of a portion (the meshed portion in FIG. 5) of the first electrode 41 on which the projected image of the second electrode 43 is not superimposed, and the second area S2 of the second electrode 43 is the area of a portion (the hatched portion in FIG. 5) of the second electrode 43 which is superimposed on the first electrode 41; i.e., the area of the entire second electrode 43.

Since the area ratio S1/S2 is less than 0.35, the present embodiment also yields an effect substantially similar to those yielded by Embodiments 1 and 2.

### Embodiment 4

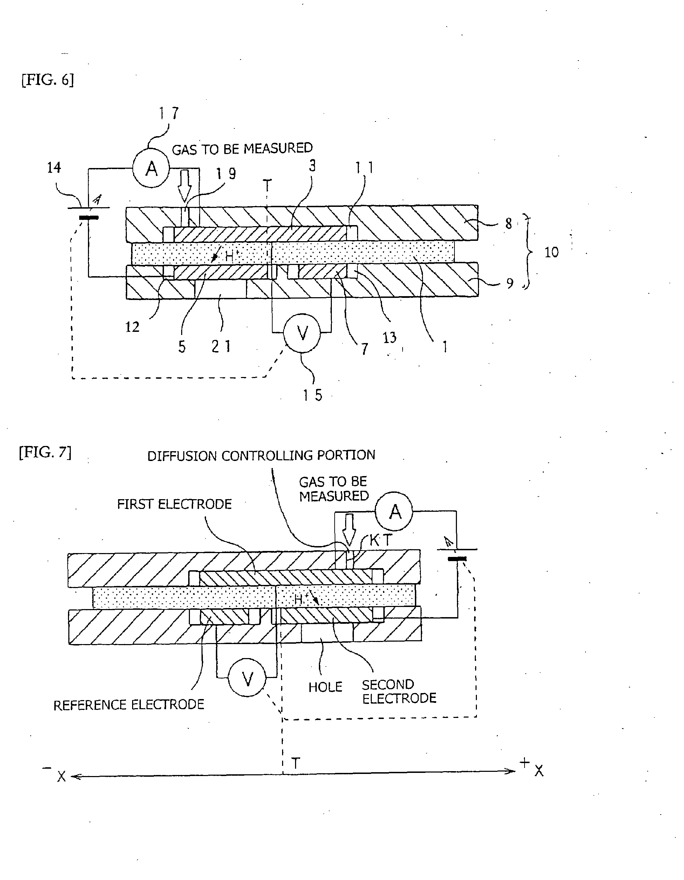

Embodiment 4 is the same as embodiment 1, except as described below. In embodiment 4, as can be seen from Fig. 6, the diffusion controlling portion 19 is disposed away from an end portion T of the second electrode 5 located on the side toward the reference electrode 7, in the direction away from the reference electrode 7 (leftward in FIG. 6). Specifically, the circumferential (right-hand in FIG. 6) end of the diffusion controlling portion is located at least 1.5 mm; for example, 8.6 mm, leftward from the end portion T of the second electrode 5.

Next will be described an experiment which was carried out in order to verify the effect of embodiment 4.

This experiment was intended to study accuracy in measurement of hydrogen gas concentration in relation to the position of the diffusion controlling portion.

(1) First, hydrogen gas sensors similar to that of embodiment 4 were manufactured. Specifically, as shown in FIG. 7, in which the origin (0) is defined as an end portion T of the second electrode located on the side toward the reference electrode, the hydrogen gas sensors were manufactured such that a circumferential end part KT of the diffusion controlling portion located on the side toward the reference electrode was located on the +X side in relation to the origin (in the direction away from the end portion T).

Four samples were manufactured such that the end part KT of the diffusion controlling portion was located 0 mm (No. 4), 1.5 mm (No. 3), 6.2 mm (No. 2), and 8.6 mm (No. 1) from the origin.

As a sample which falls outside the scope of the present invention, there was manufactured a hydrogen gas sensor in which the end part KT of the diffusion controlling portion was located in the -X direction from the origin; specifically, -1 mm (No. 5) from the origin. Notably, features other than the position of the diffusion controlling portion were similar to those of the samples of the embodiment.

(2) By use of the sample hydrogen gas sensors of embodiment 4 and the sample hydrogen gas sensor of Comparative Example, hydrogen gas concentration was measured so as to study the accuracy; i.e., the methanol dependence, of these samples in measuring hydrogen gas concentration.

Measuring conditions are itemized below. In order to stabilize hydrogen gas concentration, a constant, small current (e.g., 10 µA) was caused to flow from the first electrode to the reference electrode, thereby causing the reference electrode to serve as a self-generation-type reference electrode.

### Measuring conditions

· Gas composition: H₂=50%, CO₂=15%, H₂O=10%, CH₃OH=0% (or 5%), N₂=bal.
· Gas temperature: 80°C
· Gas flow rate: 10 L/min
· Set electric potential Vs: 150 mV

### (Electric potential set between the first electrode and the reference electrode; the first electrode assumes positive polarity)

Specifically, when the concentration of hydrogen gas in the gas to be measured which had the above-mentioned composition was measured by use of the sample hydrogen gas sensors, current flowing between the first electrode and the second electrode was measured.

The ratio of current (A0) as measured at a CH₃OH content of 0% to current as measured at a CH₃OH content of 5% (A5/A0) was calculated.

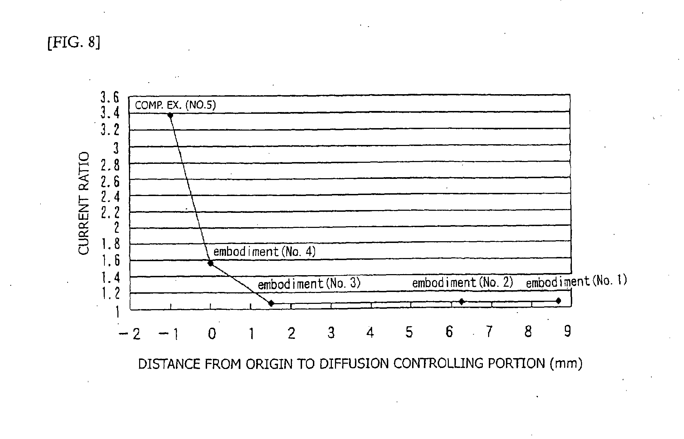

(3) Measurement results are shown in FIG. 8.

FIG. 8 shows a graph whose horizontal axis represents the distance from the origin to the diffusion controlling portion (its end part KT) and whose vertical axis represents current ratio.

As is apparent from FIG. 8, the hydrogen gas sensors, Sample Nos. 1-4, of the embodiment are low in the current ratio; i.e., the ratio of current (sensibility) as measured at a CH₃OH content of 5% to current (sensibility) as measured at a CH₃OH content of 0%, which is take as 1, as compared with the hydrogen gas sensor, Sample No. 5, of Comparative Example, indicating that Sample Nos. 1-4 exhibit high accuracy in measurement.

Particularly, through employment of an X value not less than 1.5 mm, the ratio of current (sensibility) as measured at a CH₃OH content of 5% to that at 0% is far lower.

The above-described measurement results reveal that by disposing the diffusion controlling portion away from an end portion of the second electrode located on the side toward the reference electrode, in the direction away from the reference electrode, dissociation of methanol can be suppressed, whereby hydrogen gas concentration can be accurately measured.

Therefore, the hydrogen gas sensor of the present embodiment can accurately measure the concentration of hydrogen gas in a fuel gas for use in a polymer electrolyte fuel cell without involvement of influence of, for example, methanol.

The present invention is not limited to the above-described embodiment, but may be embodied in many other specific forms without departing from the spirit or scope of the invention.

For example, the above embodiment is described while mentioning a hydrogen gas sensor for measuring the concentration of hydrogen gas in a fuel gas. However, the gas sensor of the present invention can also be applied to the case of measuring the concentration of carbon monoxide gas in a fuel gas.

## Claims

1. A gas sensor, comprising a proton conduction layer (1); a first electrode (3), a second electrode (5), and a reference electrode (7) provided in contact with the proton conduction layer; and a diffusion controlling portion (19) provided between the first electrode and an atmosphere containing a gas to be measured;
wherein an object gas component contained in the gas to be measured which is introduced from the atmosphere via the diffusion controlling portion is dissociatable, decomposable, or reactable through application of voltage between the first electrode and the second electrode such that a potential difference between the first electrode and the reference electrode becomes constant, to thereby generate protons, and concentration of the object gas component is obtainable on the basis of a limiting current generated as a result of the generated protons being pumped out via the proton conduction layer from the first electrode to the second electrode; and
wherein the first electrode and the second electrode are disposed in opposition to each other while the proton conduction layer is held therebetween, and the diffusion controlling portion is located away from an end portion (T) of the second electrode in a direction toward the reference electrode and on a side opposite to the reference electrode.

2. A gas sensor as described in claim 1, wherein the diffusion controlling portion is located at least 1.5 mm away from said end portion of the second electrode toward the reference electrode.

3. A gas sensor according to claim 1 or 2, wherein a first area S1 is an area of a portion of the first electrode on which a projected image of the second electrode is not superimposed when the second electrode is projected onto the first electrode, and a second area S2 is an area of a portion of the second electrode which is superimposed on the first electrode when the second electrode is projected onto the first electrode, and a ratio S1/S2 between first area S1 and second area S2 is less than 0.35.

4. A gas sensor as described in claim 3, wherein the first electrode and the second electrode are disposed such that, when the first electrode or the second electrode, whichever is smaller in area, is projected onto the other electrode, a projected image of the electrode having the smaller area is present within the electrode having the greater area.

5. A gas sensor, comprising a proton conduction layer (1); a first electrode (3), a second electrode (5), and a reference electrode (7) provided in contact with the proton conduction layer; and a diffusion controlling portion (19) provided between the first electrode and an atmosphere containing a gas to be measured;
wherein an object gas component contained in the gas to be measured which is introduced from the atmosphere via the diffusion controlling portion is dissociatable, decomposable, or reactable through application of voltage between the first electrode and the second electrode such that a constant potential difference is produced between the first electrode and the reference electrode, to thereby generate protons, and concentration of the object gas component is obtainable on the basis of a limiting current generated as a result of the generated protons being pumped out via the proton conduction layer from the first electrode to the second electrode; and
wherein the first electrode and the second electrode are disposed in opposition to each other while the proton conduction layer is held therebetween, and wherein a first area S1 is an area of a portion of the first electrode on which a projected image of the second electrode is not superimposed when the second electrode is projected onto the first electrode, and a second area S2 is an area of a portion of the second electrode which is superimposed on the first electrode when the second electrode is projected onto the first electrode, and a ratio S1/S2 between said first area S1 and said second area S2 is less than 0.35.

6. A gas sensor as described in claim 5, wherein the first electrode and the second electrode are disposed such that, when the first electrode or the second electrode, whichever is smaller in area, is projected onto the other electrode, a projected image of the electrode having the smaller area is present within the electrode having the greater area.

7. A gas sensor according to claim 5 or 6, wherein the diffusion controlling portion is located away from an end portion T of the second electrode in a direction toward the reference electrode, and on a side opposite to the reference electrode.

8. A gas sensor as described in claim 7, wherein the diffusion controlling portion is disposed at least 1.5 mm away from said end portion of the second electrode toward the reference electrode.

9. A gas sensor as described in any one of the preceding claims, wherein the gas sensor is a hydrogen gas sensor for measuring hydrogen gas concentration.

10. A gas sensor as described in claim 9, wherein the gas sensor is used for measuring the concentration of hydrogen gas in a fuel gas for use in a polymer electrolyte fuel cell.
